# EUROPEAN PATENT APPLICATION

(11) **EP 1 177 950 A1**
(43) Date of publication of application: **06.02.2002**
(21) Application number: 00116847.5
(22) Date of filing: 04.08.2000
(51) Int. Cl.: B60R 13/08, G01M 7/02

(54) **A process for optimizing vibration damping**

(71) Applicant: Henkel Kommanditgesellschaft auf Aktien, 40191 Düsseldorf (DE)
(72) Inventor: Santiago, Eduardo, 08190 Sant Cugat del Valles (ES); Vidal Codina, Humbert, 08170 Montornes del Valles (Barcelona) (ES)

(57) **Abstract**

A process for optimizing the vibration damping of parts comprises the following essential steps: the part to be analyzed and optimized is suspended and isolated acoustically, while the part is excited at one point and the points of the maximum of vibrational response are determined by scanning the vibrational response of each area element of said part. Subsequently, a vibration damping material is applied only in said areas of maximum vibrational response. This allows a cost effective use of highly efficient damping materials only in the essential areas of the part to be dampened.

## Description

This invention relates to a process for optimizing the vibration damping of parts, and its use for noise and vibration reduction of automotive parts or appliances. Vibration, or dynamic motion, are inherent in structures and machines having moving components. Especially since today's machines, electrical appliances and automobiles are made of thin gauge metal sheets or plastics, they are prone to strong vibration from external or internal forces like moving parts or running engines, noise from impact of gravel or water, vibration of the car body during driving. These vibrations are unpleasant and unwanted phenomena causing noise, which results in discomfort since many of these vibrations have frequencies in the audible frequency range which can propagate as solid-borne sound through the entire structure or body of e.g. a car. Also, malfunctioning or even wear and fatigue of vibrating parts may occur, if no provisions for vibration damping are taken.

Numerous materials to be used for vibration damping or noise abatement are known. However, most of these compositions require many manufacturing steps and/or components. A prime example of the conventional products for vibration damping are highly filled bitumen pads which have only the function of vibration damping. These pads have to be extruded, die-cut and shaped in separate steps. Prior to application they frequently have to be heat formed to fit them to non flat structures and then glued to the car body, machine or appliance. Although these bitumen based pads are reasonable in their price per mass unit cost, they involve extensive stock keeping and can in most cases be applied only by manual labor.

Moreover, since they tend to be brittle and prone to breaking, contamination of the working and storage area with bits of pieces and dust is difficult to be avoided. Another disadvantage of the bitumen based pads is their high specific weight which adds significantly to the weight of a car or appliance. Therefore, various methods have been developed to replace this costly manual procedure by products which have a lower specific weight and can be easily applied by robots from bulk deliveries. Plastisol formulations serving the dual function of underbody coating (protection against abrasion) and acoustic damping have been described in EP-A-358598, or DE-A-3444863. DE-A-4013318 discloses a two layer underbody coating which performs the dual functions of protecting against abrasion and absorbing noise resulting from impact (stones, gravel, water, etc.).
According to WO9535345 plastisol compositions based on vinyl chloride/vinyl acetate copolymers, produced by a suspension polymerization process, have a low viscosity. Even when the composition contains a high amount of polymer relative to the amount of plasticizer present, they can be made into plastisol compositions suitable for airless spraying application. These compositions are storage stable and easy to gel. Coatings based on these plastisols have good sound-proofing properties even when their vinyl acetate content is high. Usually, plastisols are applied to the surface by spraying either manually or by a robot.
US-A-4075288 discloses rubber sheets based on polyisoprenes having a minimum of 60% of 1,2- and 3,4-vinyl structure to be useful as vibration-damping materials. This reference suggests to vulcanize said rubber sheets and bond them with a solvent borne adhesive to the metal sheet.
EP-A-658597 discloses sealant, adhesive and / or coating compositions with damping properties for use in the automotive industry containing 3,4-polyisoprene and blends of liquid and/or solid rubbers and/or finely divided polymer powders and optionally plasticizers, fillers and other conventional raw materials. The compositions may be cured similar to the conventional sealant/adhesive and/or coating compositions. According to this reference, these materials exhibit superior vibration damping properties compared to conventional compositions not containing 3.4-polyisoprene.

WO9616136 discloses elastomer products with acoustic attenuation properties based on single component heat-curing reactive compounds which comprise liquid rubber(s) with reactive olefinic double bonds and optionally solid rubber and sulfur-based vulcanization systems having a high acoustic loss factor maximum at the vulcanized state in a large range of use temperatures from about +10 °C to +40 °C. These compositions may also contain finely powdered thermoplastic polymers. These compositions are useful as acoustically dampening adhesives, sealing or coating masses. These compositions can be supplied in bulk and are applied to the surfaces to be dampened by spraying or extruding from drums or they can be preformed as sheets, tapes or ribbons which have pressure sensitive adhesive properties prior to vulcanization, so they can be laid on the structures to be dampened and will adhere to the substrate initially followed by a heat curing step.

All of the above mentioned materials have a damping effect when applied to the whole area of a vibrating structure like thin gauge sheet metal. This implies that part of the vibration energy is absorbed by the damping material bonded to the vibrating structure and eventually converted to heat. In order to be an effective vibration damping material suitable for the above mentioned applications, this material must possess at least three basic properties: The first essential property is, of course, that such a material should have a high damping coefficient (tan δ) within the widest possible temperature and frequency ranges. Amorphous macromolecular materials exhibit a high damping coefficient in the transition zone between the vitreous state and the rubbery state, i.e. at their glass transition temperature.
This means, for effectiveness the anti-vibration material must have a glass transition temperature (or temperature maximum of the tan δ ) in the stress vibrations frequency range close to the use temperature. For automobile applications this would be the temperature range between about -10°C and about +40°C. Secondly the modulus of the damping material should be capable of being adjusted over a wide range to withstand mechanical strain. A third desirable property of the damping material is good stability under static load. It is known that in the use zone and for the deformations which are imposed a good anti-vibration material has to have viscoelastic properties. If the material consists of a linear polymer, it will exhibit a significant tendency to creep.
In addition to these basic properties, it is of utmost importance, that the anti-vibration material should adhere well to the substrate to be dampened. Finally it is necessary for the anti-vibration material to possess good resistance to aging and good resistance to fatigue. The interrelation between the temperature dependence between the viscoelastic loss modulus, complex modulus and frequency dependence of polymer based materials for vibration damping or noise abatement are summarized by H. Oberst, L. Brun, F. Linhard in "Schwingungsdampfende Kunststoffe in der Lärmbekämpfung", Kunststoffe Vol. 51 (1961) page 195 -508.

It is common practice to determine the efficacy of vibration damping materials in a bending vibration test according to DIN 53440 ("Oberst method"). For this, spring steel strips of 240mm x 10mm x 1mm are coated on a 200mm long section with a layer of the composition to be tested for their vibration efficacy. Curable materials are subsequently cured, afterwards this coated steel strip is submitted to forced vibration in said bending vibration test according to DIN 53440. The attenuation of this forced vibration is recorded over several frequency and temperature ranges. The combined loss factor over temperature and coating weight is calculated from these data.
For cost and weight reduction purposes, it is desirable, to apply the vibration damping material only at the lowest effective level. This implies that it is highly desirable to know exactly those points in a vibrating structure where a minimum amount of dampening material creates the maximum efficacy with respect to damping the vibration and thus reducing the noise generated from the vibrating structure. The objective of the present invention is therefore to develop a strategy to minimize the covered surface and the applied volume of the vibration damping material.
According to the present invention, this object is achieved by a process for optimizing the vibration damping of parts which comprises the following essentials steps.
(a) the part to be optimized is excited with forced vibration at one point
(b) the points of maximum of vibrational response are determined by scanning the vibrational response of each area element of said part.
(c) an effective vibration damping material is applied only to said area of maximum vibrational response.

This means that the vibration mode of a bare part is analyzed by a mapping procedure, determining the points of maximum vibrational response, applying to these areas a damping material, which is preferably a highly effective material. This damping material is preferably based on curable rubber compositions, for example those disclosed WO 9616136, which are incorporated by reference.
Alternatively plastisol compositions as disclosed in WO 9535345 or DE - A - 4013318 may also be used. The preferred materials are the above mentioned curable rubber compositions. As a control, the vibration modes and mapping procedure is repeated after the dampening material has been applied, to verify that the dampening effect has reached a satisfactory level.
The method according to the present invention can also be used for effectively applying hot bitumen compositions as disclosed in EP-A-617098, aqueous bitumen emulsions as disclosed in EP-A-685880, epoxy based materials or other compositions of high damping properties.
The mapping is being done by Modal Vibration analysis. The basic principles of this Modal Analysis are known. Theoretical and Basic Experimental procedures have been disclosed by N. M. Mendes Maia and J. M. Montalvao e Silva in "Theoretical and Modal Analysis", Research Studies Press Ltd., Baldock, England, 1997.
According to the present invention, the excitation of a part is done by means of a shaker or a hammer at a selected point, followed by measurement of the vibrational response in each area element.
The preferred vibration pattern is a random vibration of homogenous intensity over a chosen range of frequencies between 0 and 800 Hz, preferably between 0 and 400 Hz. However, other excitation modes may also be applied using deterministic transient or periodic dynamic signals such as sinusoidal vibration, see N. M. Mendes Maia et al, chapter 1.

The excitation spot is selected as the spot of most likely ingress of disturbing vibrations. For example, if the part to be analyzed is a door of a car, the excitation spot will be close to the hinge of the door.
The sensing or measurement of the vibrational response is done by means of a transducer. The transducer senses the acceleration at the measuring spot. This numeric value for acceleration at the sensed spot is subsequently transformed by known algorithms into mobility values. The mobility is the average speed of vibrating element per unit of the exciting force [(m/s)/N]. The excitation by the shaker is done by a random vibration because this offers the advantage, that a complete spectrum can be measured in one sweep as compared to single frequency sinus excitations.
The whole area of the part to be analyzed is mapped, which means that pickup spots, spaced at distances of 2-15 cm, preferably 2-5 cm, are sensed by means of the transducer within each mapping element. This mapping can be done by placing the sensing transducer manually on each mapping element (for example square of 5 x 5 cm). The sensing transducer can also be moved automatically by robot control. Another method of measuring the response is laser scanning of the mobility. Since the scanning by a laser utilizes the response of the reflected laser beam, no transducer is necessary as a sensor.
The signal generated from the transducer or laser is amplified and processed through a Fast Fourier Transformation (FFT), thus generating a mobility versus frequency response.

With this mapping procedure, for each element of the part a spectrum of mobility versus frequency is obtained.
From these data, the maximum peak value of mobility within each spectrum is taken and graphically plotted over the whole area of the part.

Subsequently, the areas displaying the maximum peak value of mobility are coated with the vibration damping material and the whole mapping procedure is repeated as control for the improvement in vibration damping. The damping material applied can cover one single larger area or several small areas. Its shape may have any geometric form like rectangular, square, triangular, circular or elliptical patches or small continuous or discontinuous beads.

The basic principles of the process according to this invention are further illustrated by the accompanying drawings. As an example, a door of a car is being analyzed, selecting a spot close to the hinge as excitation spot. The door to be analyzed is suspended from rubber cords to isolate the part acoustically from the suspending device, thus avoiding acoustical transmission to and from the suspension frame work. In addition, it is checked, that the ratio of input excitation energy to output excitation energy is approximately 1 in order to verify coherence, i.e. there is no disturbance of the system.

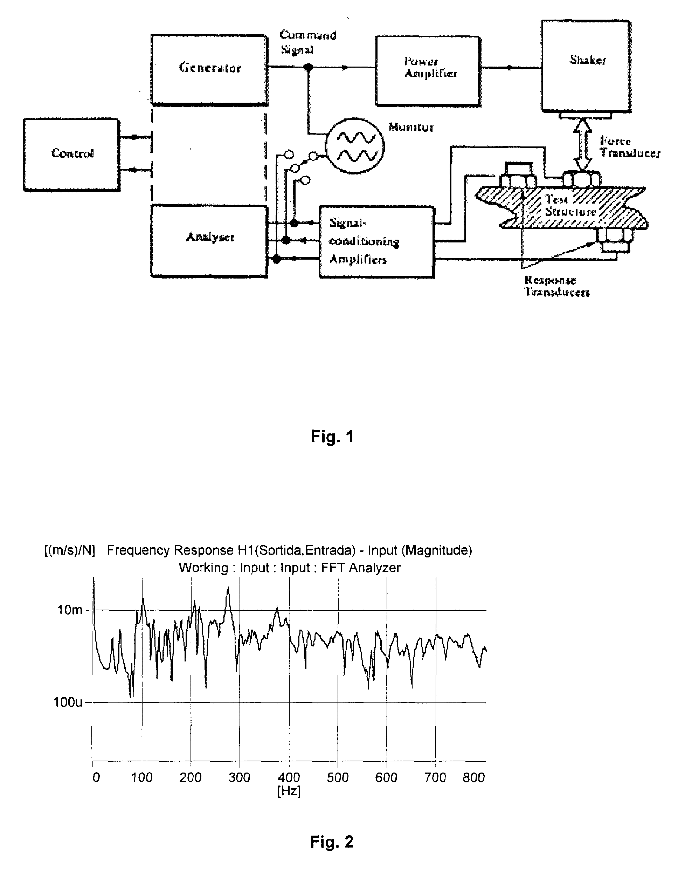

**Figure 1** shows schematically the modal vibration analysis with the tested structure being excited by a shaker via a force transducer which receives the vibrational signal from a generator via a power amplifier. The vibrations at the different spots of the part are picked up by response transducers, the signals are amplified and analyzed using a FFT - Analyzer.

**Figure 2** shows the spectrum of mobility versus frequency of one vibrating element obtained via Fast Fourier Transformation.

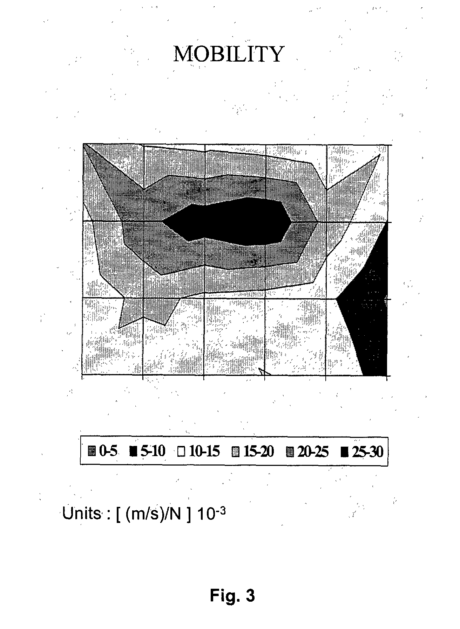

**Figure 3** shows the result of mapping the maximum peak value of mobility within a selected spectrum displaying the distribution of mobility over a given area of the part. Mobility value ranges are given in 10⁻³ [m/s/N].

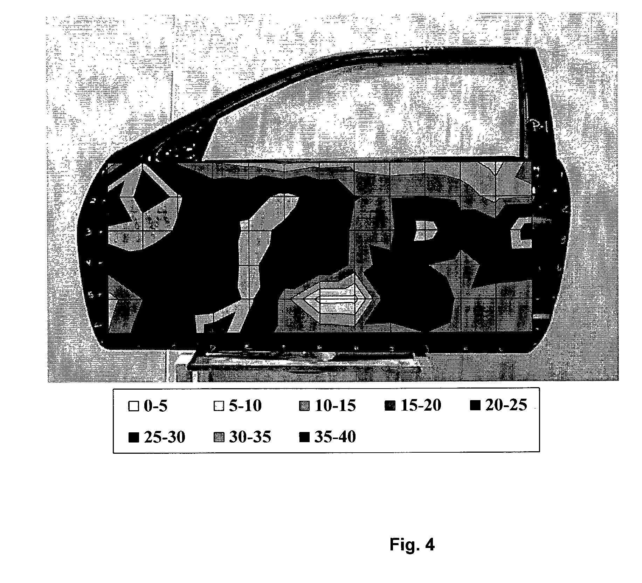

**Figure 4** shows the result of a mapping procedure for a complete door of a car prior to applying damping material. Areas of low vibration can be clearly depicted from the low mobility values (0-5), equally, areas of highest vibration are identified by the highest mobility values (35-40)

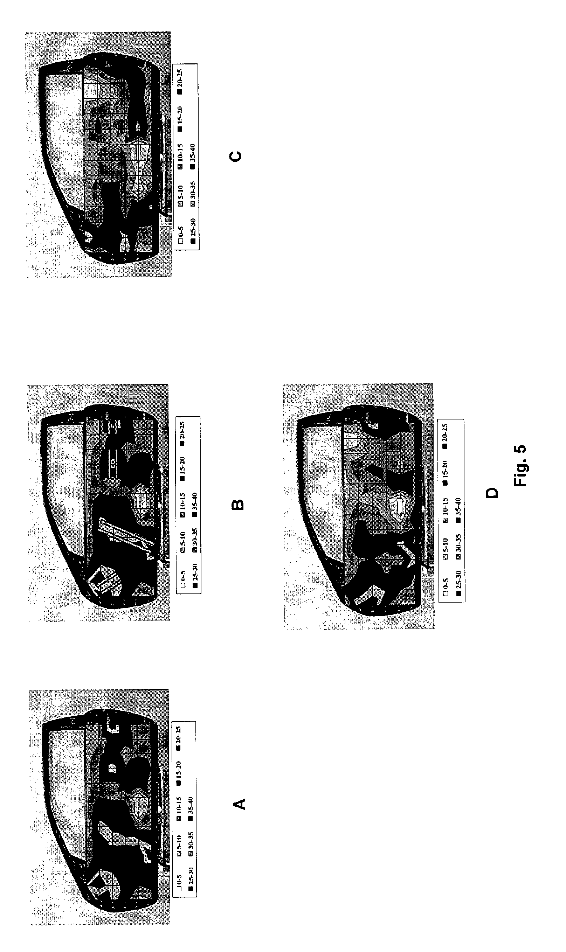

**Figure 5** illustrates the whole process for optimizing the vibration damping of a part - again this a door from a car. In the first step the areas of maximum mobility are identified by the procedure described above resulting in a map of the peak value of mobility(A). In the second step (B), the selected areas of peak mobility are being covered by a rubber - based vibration damping material as disclosed in WO 9616136. In a third step, the mapping of maximum mobility is repeated with a door having the cured rubber patches applied to the door (C). This can be compared with the result from applying standard melt sheets based on bitumen-materials at high application load (D). Said standard melt sheets were placed in areas according to previous experience by trial and error and not from a mapping procedure.
From this comparison it is very obvious that the process for optimizing the vibration damping to the present invention allows for minimizing the amount of highly effective rubber based material on those areas which are determined by the mapping procedure.

The advantages of the process according to the present invention are
- avoiding "dirtiness" in the application shop, meaning avoiding of a serious nuisance according to the quality standards in the paint shop.
- reduced complexity in terms of number of parts needed for each vehicle, thus reducing necessary storage room and internal transportation in the assembly line.
- avoiding problems of defective positioning of vibration damping pads and poor ergonomics on certain application areas

- Improved flexibility and impact resistance of the damping material at low temperatures compared to bitumen based melt sheets
- better recyclability since the rubber based materials can be incinerated producing fumes which are significantly less deleterious than the fumes from bitumen incineration.
- avoiding the high density of bitumen-pads, thus reducing the weight of vehicle at the same acoustical efficacy
- the rubber based damping materials can be applied automatically with robots or other application machinery in the body shop, thus suppressing any possibility of producing dirtiness in the paint shop
- these damping materials can be supplied in bulk, thus reducing the number of products required for the damping of a car to one to be applied from bulk for all application areas in the whole vehicle.

The process according to this invention allows optimizing the amount of vibration material to be minimized, thus reducing the overall cost per unit car with an equal performance compared to the vibration damping of the state of the art. Of course, this mapping analysis has to be carried out only on a prototype part, thus identifying the areas of maximum mobility to be dampened on every part of the same design.

## Claims

1. A process for optimizing the vibration damping of parts **characterized by** the following essential steps
a) the part is excited at one point
b) the points of the maximum of vibrational response are determined by scanning the vibrational response of each area element of said part
c) a vibration damping material is applied only in said areas of maximum vibrational response.

2. A process as claimed in claim 1 wherein the part is excited by means of a shaker or of a hammer.

3. A process as claimed in claim 2 wherein the excitation pattern is a random vibration of homogeneous intensity over a range of frequencies

4. A process as claimed in claim 3 wherein the range of frequencies is 0 - 800 Hz, preferably 0 - 400 Hz.

5. A process as claimed in claim 1 wherein each area element is a square element of 2 to 15 cm by 2 to 15 cm.

6. A process as claimed in claim 1 wherein the vibrational response is sensed by means of a transducer which senses the acceleration.

7. A process as claimed in claim 6 wherein a spectrum of mobility versus frequency is recorded.

8. A process as claimed in claim 7 wherein the whole part is mapped thus determining the spectrum of mobility vs. frequency over the whole area of said part.

9. A process as claimed in claim 1 wherein the vibration damping material is applied to the areas displaying a maximum peak value of mobility.

10. A process as claimed in claim 9 wherein the vibration damping material is a curable rubber composition.

11. A process as claimed in claim 9 wherein the vibration damping material is a plastisol.

12. The use of a process according to any of the preceding claims for damping the vibration of automotive or appliance parts.
